# DEMANDE DE BREVET EUROPEEN

(11) **EP 0 831 646 A1**
(43) Date de publication de la demande: **25.03.1998**
(21) Numéro de dépôt: 97410103.2
(22) Date de dépôt: 18.09.1997
(51) Int. Cl.: H04N 5/44

(54) **Dispositif de conversion non-linéaire de format d'images de télévision**

(30) Priorité: 20.09.1996 FR 9611682
(71) Demandeur: SGS-THOMSON MICROELECTRONICS S.A., 94250 Gentilly (FR)
(72) Inventeur: Lagarde, Jean-Pierre, 38950 Saint Martin le Vinoux (FR); Leurent, Patrice, 38120 Saint Egreve (FR)
(74) Mandataire: de Beaumont, Michel

(57) **Abrégé**

L'invention concerne un dispositif de conversion de format d'images de télévision du type comportant deux mémoires de stockage de lignes d'image, commutées alternativement en lecture et en écriture, et un circuit de commande délivrant auxdites mémoires une fréquence d'écriture (CKW) et une fréquence de lecture (CKR), le circuit de commande comportant des moyens programmables de génération, par division d'une fréquence de référence (f0), desdites fréquences (CKW, CKR) asservies sur un signal de synchronisation horizontale (Hsync), une première fréquence (CKW) étant fixe et une deuxième fréquence (CKR) étant programmée pour suivre une loi prédéfinie de variation du taux de division d'obtention de cette fréquence, la périodicité de ladite loi de variation correspondant à la durée d'une ligne de balayage.

## Description

La présente invention concerne un dispositif de conversion de format d'images pour affichage sur un téléviseur d'un format différent de celui des images. L'invention s'applique plus particulièrement à un tel dispositif effectuant une conversion non-linéaire.

Les écrans de télévision sont actuellement disponibles en deux formats normalisés, respectivement 4/3 et 16/9, qui définissent la largeur de l'écran par rapport à sa hauteur. Les images destinées à être affichées sur l'écran sont susceptibles d'être diffusées selon ces deux formats. Si des images sont reçues dans un format différent de celui de l'écran, les images sont généralement comprimées ou dilatées préalablement à leur affichage pour éviter que les images soient fortement déformées à l'affichage.

La distorsion (compression ou dilatation) opérée sur les images peut être effectuée verticalement et/ou horizontalement. L'invention concerne, plus particulièrement, un dispositif de conversion du format de l'image effectuant une distorsion horizontale.

On a récemment proposé un mode d'affichage, dit mode panorama, qui consiste à effectuer une distorsion horizontale et non-linéaire des images devant être affichées dans un format différent. Ce mode d'affichage permet d'afficher l'image en plein écran en minimisant la distorsion dans la zone centrale de l'écran et en accentuant la distorsion sur les bords. On évite ainsi l'apparition de bandes noires très importantes de part et d'autre des images ou une perte des bords des images, tout en minimisant la déformation perceptible par l'utilisateur.

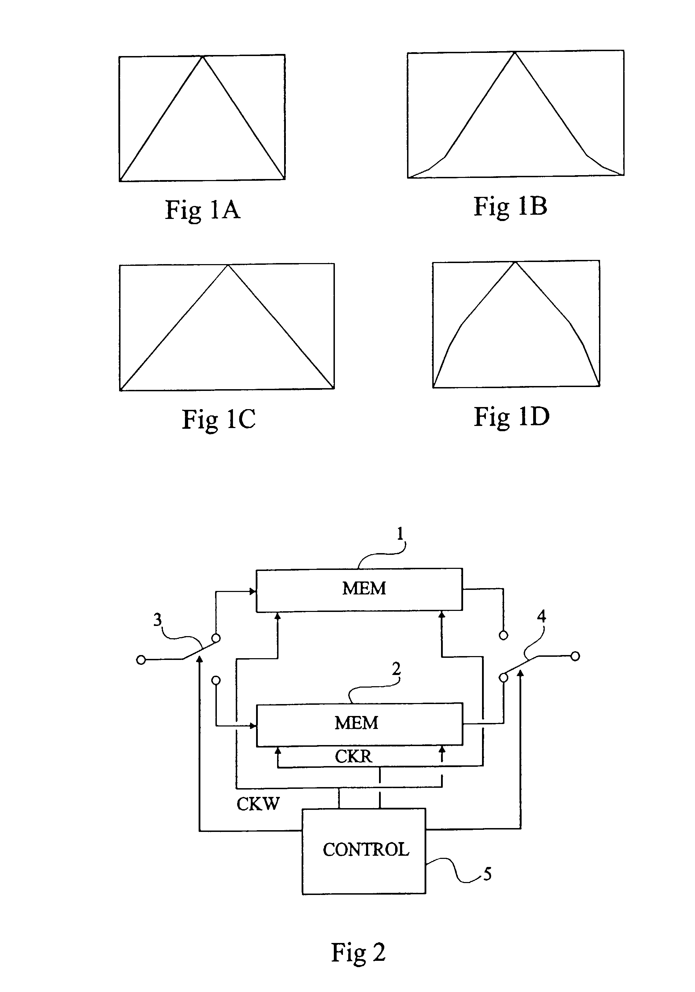

Les figures 1A à 1D illustrent schématiquement le mode d'affichage panorama. Les figures 1A et 1C représentent, respectivement des images au format 4/3 et 16/9. Les figures 1B et 1D représentent schématiquement l'affichage des images représentées, respectivement aux figures 1A et 1C, sur un écran, respectivement au format 16/9 et au format 4/3. Dans la représentation des figures 1A à 1D, on a utilisé, par exemple, une image définissant un triangle qui constitue une figure géométrique illustrant particulièrement bien la distorsion réalisée en mode panorama.

Pour l'affichage, sur un écran au format 16/9, d'une image au format 4/3 (figures 1A et 1B), l'image est dilatée horizontalement. La zone centrale de l'image ne subit, de préférence, aucune modification tandis que, plus on s'approche des bords de l'image, plus la dilatation est importante.

Pour l'affichage, sur un écran au format 4/3, d'images au format 16/9 (figures 1C et 1D), on effectue une compression non-linéaire au lieu d'une dilatation.

La figure 2 représente un exemple de dispositif numérique classique de compression non-linéaire.

Ce dispositif comporte deux mémoires 1 et 2 associées à des commutateurs, respectivement d'entrée 3 et de sortie 4, de sélection de la mémoire utilisée en écriture et de celle utilisée en lecture. Chaque mémoire 1 ou 2 a la capacité de stocker l'intégralité des données vidéo relatives à une ligne de l'image, c'est-à-dire à la fois les informations de luminance (Y) et les informations de chrominance (par exemple, B-Y et R-Y) . Les mémoires 1 et 2 et les commutateurs 3 et 4 sont associés à un circuit 5 de commande pour sélectionner, à chaque ligne, celle des mémoires 1 et 2 qui est en écriture, respectivement, en lecture. Ainsi, une ligne d'image, par exemple au format 4/3, est mémorisée au rythme d'une première horloge CKW dans une des mémoires, par exemple 1, pendant que le contenu de l'autre mémoire, par exemple 2, est lu au rythme d'une deuxième horloge CKR pour affichage de cette image au format 16/9. Des convertisseurs (non représentés) analogique-numérique et numérique-analogique sont respectivement associés aux entrées et sorties du circuit.

Pour réaliser une distorsion non-linéaire tout en respectant le rythme des images, l'horloge CKW est le plus souvent une horloge de fréquence fixe et l'horloge CKR est une horloge de fréquence variable dont la fréquence moyenne sur une ligne d'affichage correspond à la fréquence de l'horloge CKW.

La fréquence d'écriture CKW correspond à la fréquence d'acquisition des pixels de la ligne tandis que la fréquence de lecture CKR correspond à la fréquence d'affichage des pixels.

L'horloge CKR est généralement modulée en fréquence pour que, pour une dilatation linéaire, sa fréquence soit plus faible que celle de l'horloge CKW au début et à la fin de chaque ligne, et que sa fréquence soit légèrement plus élevée que celle de l'horloge CKW dans la partie centrale de chaque ligne. L'image est donc, en pratique, légèrement distordue dans sa partie centrale.

Un problème qui se pose dans ce genre de dispositifs est lié à l'obtention des horloges d'écriture et de lecture, respectivement CKW et CKR, des mémoires.

Généralement, les fréquences CKW et CKR sont obtenues au moyen de boucles à verrouillage de phase (PLL) analogiques. Une première PLL génère, à partir d'un quartz et au moyen d'un premier oscillateur commandé en tension (VCO), la fréquence CKW. La fréquence CKW est asservie sur un signal Hsync de synchronisation horizontale du signal vidéo reçu. Une deuxième PLL génère, à partir de la fréquence CKW et au moyen d'un deuxième VCO, la fréquence CKR. On ajoute au signal de commande de ce deuxième VCO, un signal de perturbation analogique pour rendre la tension de commande du VCO variable. Cette perturbation représente une loi de variation non-linéaire prédéfinie qui correspond à la distorsion souhaitée pour la fréquence de lecture CKR.

L'obtention de ce signal de perturbation est particulièrement délicate. En effet, ce signal analogique doit représenter, de façon précise, la loi de variation souhaitée.

De plus, le signal de perturbation doit être synchrone avec la fréquence CKR, donc asservi sur la fréquence variable de balayage horizontal, côté affichage, dans la mesure où la loi de variation se répète avec une période correspondant à la durée d'une ligne. Cela rend la réalisation des circuits de génération des fréquences CKW et CKR particulièrement complexe.

Un autre inconvénient des dispositifs de conversion classiques est qu'ils sont dédiés à un type de conversion. Par exemple, si un dispositif est destiné à effectuer une dilatation non-linéaire de l'image pour une conversion d'images au format 4/3 vers un affichage au format 16/9, le dispositif utilisé est dédié à une telle conversion.

Les documents JP-A-07067045 et JP-A-07298086 décrivent des dispositifs de conversion utilisant un signal analogique pour effectuer une modulation parabolique de la fréquence de lecture, qui présentent les inconvénients cités précédemment.

Le document JP-A-07067046 décrit un dispositif de conversion comprenant un circuit de commande d'une mémoire qui délivre une horloge de lecture correspondant, soit à une horloge délivrée par une PLL recevant l'horloge d'écriture, soit à une impulsion comprimant l'horloge délivrée par la PLL. La commutation entre les deux modes d'obtention de l'horloge de lecture conduit obligatoirement à un découpage de l'image en trois zones figées.

La présente invention vise à proposer un nouveau dispositif de conversion non-linéaire qui puisse s'adapter à différents types de conversion.

La présente invention vise également à proposer un dispositif de conversion programmable.

La présente invention vise également à permettre la conversion quelque soit la fréquence fixe servant à obtenir les fréquences d'écriture et de lecture.

L'invention vise en outre à proposer une solution applicable également à l'horloge d'écriture.

Pour atteindre ces objets, la présente invention prévoit un dispositif de conversion de format d'images de télévision du type comportant deux mémoires de stockage de lignes d'image, commutées alternativement en lecture et en écriture, et un circuit de commande délivrant auxdites mémoires une fréquence d'écriture et une fréquence de lecture, le circuit de commande comportant des moyens programmables de génération, par division d'une fréquence de référence, desdites fréquences asservies sur un signal de synchronisation horizontale, une première fréquence étant fixe et une deuxième fréquence étant programmée pour suivre une loi prédéfinie de variation du taux de division d'obtention de cette fréquence, la périodicité de ladite loi de variation correspondant à la durée d'une ligne de balayage.

Selon un mode de réalisation de la présente invention, la loi de variation est contenue dans une table programmable contenant des incréments à ajouter, au rythme de la deuxième fréquence, à un premier taux de division d'obtention de la première fréquence, pour obtenir un deuxième taux de division d'obtention de la deuxième fréquence.

Selon un mode de réalisation de la présente invention, la loi de variation est non-linéaire.

Selon un mode de réalisation de la présente invention, la loi de variation présente une valeur moyenne nulle rapportée à une ligne de balayage.

Selon un mode de réalisation de la présente invention, lesdits moyens de génération comportent : une boucle à verrouillage de phase analogique propre à délivrer la fréquence de référence à partir d'un quartz ; une boucle à verrouillage de phase numérique propre à délivrer, à partir de la fréquence de référence et dudit premier taux, la première fréquence asservie sur ledit signal de synchronisation horizontale, ledit premier taux étant un nombre fractionnel représentant le taux de division moyen de la fréquence de référence par la première fréquence ; et un circuit numérique de génération de la deuxième fréquence à partir de la fréquence de référence et dudit deuxième taux.

Selon un mode de réalisation de la présente invention, la boucle numérique et le circuit de génération de la deuxième fréquence comportent, chacun, un synthétiseur de fréquence recevant en entrée, la fréquence de référence et, respectivement, lesdits premier et deuxième taux.

Selon un mode de réalisation de la présente invention, lesdits moyens de génération comportent : une première boucle à verrouillage de phase analogique propre à délivrer la fréquence de référence à partir d'un quartz ; une boucle à verrouillage de phase numérique propre à délivrer, à partir de la fréquence de référence, une horloge pixel asservie sur le signal de synchronisation horizontale ; une deuxième boucle à verrouillage de phase analogique de génération de la première fréquence à partir de l'horloge pixel, pourvue d'un oscillateur commandé en tension et d'un premier diviseur programmable par ledit premier taux, ledit premier taux étant un nombre entier ; et un deuxième diviseur, programmable par ledit deuxième taux et délivrant la deuxième fréquence à partir d'une fréquence délivrée par ledit oscillateur, ledit deuxième taux étant un nombre entier.

Selon un mode de réalisation de la présente invention, la première fréquence fixe est la fréquence d'écriture, la deuxième fréquence programmée étant la fréquence de lecture.

Selon un mode de réalisation de la présente invention, la première fréquence fixe est la fréquence de lecture, la deuxième fréquence programmée étant la fréquence de d'écriture.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 qui ont été décrites précédemment sont destinées à exposer l'état de la technique et le problème posé ;
la figure 3 représente un premier mode de réalisation d'un circuit programmable de génération d'horloge d'un dispositif de conversion selon la présente invention ;
la figure 4 représente un mode de réalisation d'un synthétiseur de fréquence d'un circuit tel que représenté à la figure 3 ; et
la figure 5 représente un deuxième mode de réalisation d'un circuit programmable de génération d'horloge d'un dispositif de conversion selon la présente invention.

Un dispositif de conversion de format d'images selon la présente invention a une structure similaire à celle d'un dispositif classique tel que représenté en figure 2. Il utilise deux mémoires alternativement en écriture et en lecture pour modifier la fréquence d'affichage des pixels à l'intérieur d'une ligne d'image.

Une distinction entre un dispositif classique et un dispositif selon l'invention réside dans les moyens utilisés pour l'obtention des horloges d'écriture (d'acquisition des pixels) et de lecture (d'affichage des pixels) des mémoires.

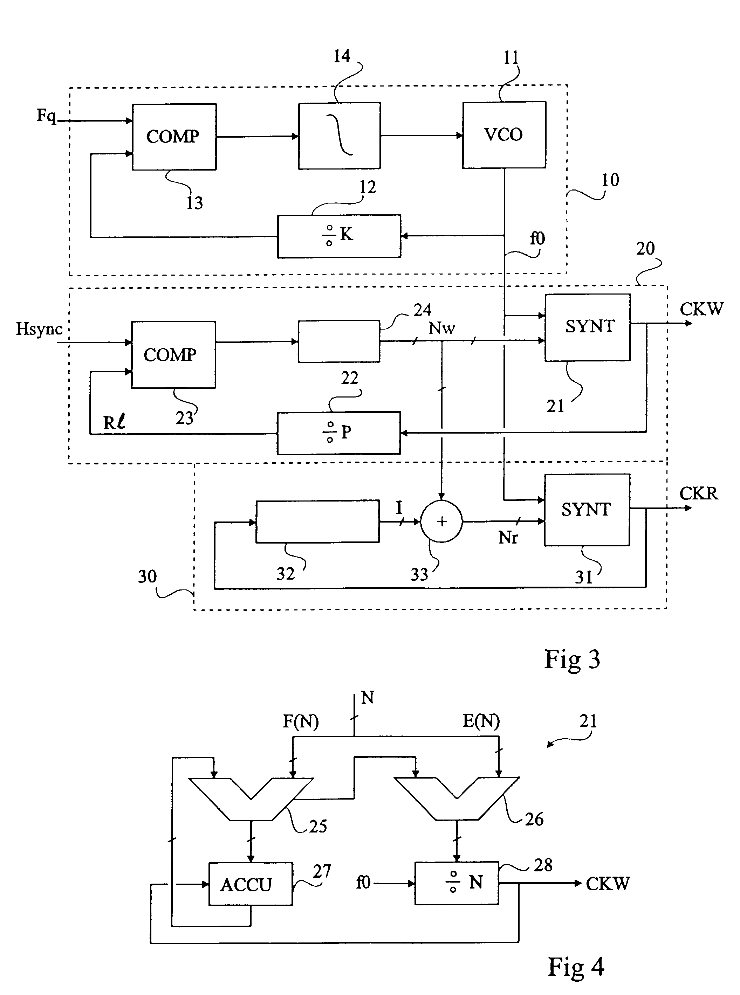

La figure 3 représente un premier mode de réalisation d'un circuit de génération d'horloge selon la présente invention.

Une caractéristique de la présente invention est de permettre la génération de deux horloges synchrones et asservies sur la fréquence de synchronisation horizontale du signal vidéo reçu, une de ces horloges étant programmable.

Le circuit de génération d'horloge représenté à la figure 3 comporte une boucle à verrouillage de phase analogique (PLL) 10 destinée à fournir, à partir d'une fréquence Fq d'un quartz (non représenté), une fréquence de référence f0 très élevée (par exemple, de l'ordre de 200 à 400 MHz). La PLL 10 présente une structure classique de PLL analogique délivrant une fréquence de référence. Elle comporte un oscillateur commandé en tension (VCO) 11 dont une sortie délivre le signal f0. La sortie du VCO 11 est envoyée sur un diviseur 12 dont une sortie est reliée à une première entrée d'un comparateur de phase (COMP) 13 qui reçoit, sur une seconde entrée, la fréquence Fq du quartz. La sortie du comparateur 13 est envoyée sur un filtre passe-bas 14 dont une sortie sert à commander le VCO 11.

La PLL 10 est associée à une PLL numérique 20. La PLL 20 est, dans ce mode de réalisation, destinée à fournir un signal d'horloge CKW d'écriture des mémoires du dispositif de conversion de format, l'horloge CKW étant asservie sur le signal de synchronisation horizontale Hsync.

La boucle 20 comporte un synthétiseur de fréquence 21, un diviseur 22, un comparateur de phase 23 et un bloc de calcul 24. Le comparateur 23 reçoit, sur une première entrée, le signal de synchronisation horizontale Hsync, une deuxième entrée étant reliée à une sortie du diviseur 22. Le diviseur 22 a pour rôle de diviser la fréquence CKW délivrée par le synthétiseur 21, pour obtenir une référence ligne Rl permettant de déterminer l'erreur de phase par rapport au signal Hsync afin d'asservir le signal CKW sur le signal Hsync. La sortie du comparateur 23 délivre un signal d'erreur au bloc 24 qui détermine la période d'un pixel du signal vidéo reçu, et donc un taux moyen Nw de division à appliquer au signal f0 pour obtenir la fréquence CKW. Le nombre Nw est, selon ce premier mode de réalisation, un nombre fractionnel. Le synthétiseur de fréquence 21 a pour rôle de diviser la fréquence f0 par le nombre Nw pour obtenir le signal CKW.

Si le taux du diviseur 12 est K, le taux de division moyen Nw correspond au produit du nombre K par le rapport de la fréquence Fq sur la fréquence CKW. Le diviseur 22 est alors un diviseur par P, où P représente le nombre de pixel d'une ligne.

Un mode de réalisation particulier d'un synthétiseur de fréquence numérique est représenté à la figure 4.

Le synthétiseur comporte deux additionneurs 25 et 26, un accumulateur 27 et un diviseur par N 28. Le signal f0 est envoyé sur une entrée du diviseur par N 28 dont une sortie délivre le signal CKW. La partie entière E(N) du nombre N, exprimée en binaire, est envoyée sur une première entrée de l'additionneur 26 dont la sortie programme le diviseur 28 pour fixer son taux de division. La partie fractionnelle F(N) du nombre N est envoyée sur une première entrée de l'additionneur 25 dont la sortie est envoyée sur l'accumulateur 27. Une deuxième entrée de l'additionneur 25 reçoit une sortie de l'accumulateur 27. La deuxième entrée de l'additionneur 26 reçoit le débordement de l'additionneur 25. L'accumulation de la partie fractionnelle F(N) dans l'accumulateur 27 se fait au rythme du signal d'horloge CKW.

Une caractéristique de la présente invention est d'utiliser la PLL numérique 20 pour générer, dans ce mode de réalisation, un deuxième signal d'horloge CKR variable correspondant à la fréquence de lecture des mémoires du dispositif de conversion.

Selon la présente invention, un circuit 30 reçoit à la fois le signal f0 délivré par la PLL analogique 10 et le nombre Nw calculé par la PLL numérique 20. Le circuit 30 comporte un synthétiseur de fréquence 31 de constitution similaire au synthétiseur de fréquence 21 représenté à la figure 4. La sortie du synthétiseur 31 délivre le signal CKR de lecture des mémoires du dispositif de conversion.

Selon l'invention, le synthétiseur 31 effectue une division numérique du signal f0 par un nombre Nr variable qui correspond à la somme du nombre Nw calculé par la PLL 20 et d'un incrément I programmé, contenu dans une table d'incréments 32 du circuit 30. La table d'incréments 32 est, par exemple, contenue dans un registre programmable commandé par le signal CKR délivré par le synthétiseur 31. Ainsi, à chaque période du signal CKR, donc à chaque période pixel du point de vue de l'affichage, le registre 32 délivre un incrément I (positif ou négatif) à ajouter au nombre Nw au sein d'un additionneur 33 du circuit 30 pour obtenir le nombre Nr.

Comme le nombre Nw est issu de la PLL 20, le signal CKR obtenu est bien asservi sur le signal Hsync. De plus, les signaux CKW et CKR sont synchrones dans la mesure où ils sont tous deux obtenus sur la base du même signal f0.

Un avantage de la présente invention est qu'au moyen de la table d'incréments contenue dans le registre 32, il est particulièrement aisé de garantir que la distorsion réalisée ait une valeur moyenne souhaitée, par exemple, une valeur moyenne nulle sur la ligne de balayage.

Un autre avantage de la présente invention est que le dispositif ainsi obtenu est entièrement programmable. Ainsi, il est possible, à partir d'un même circuit intégré, de réaliser une compression ou une dilatation des images en fonction du poste de télévision dans lequel doit être monté ce circuit.

Un autre avantage d'un dispositif de conversion programmable selon l'invention est qu'il permet également de réaliser une distorsion linéaire classique des images. Il suffit que tous les incréments de la table 32 aient la même valeur.

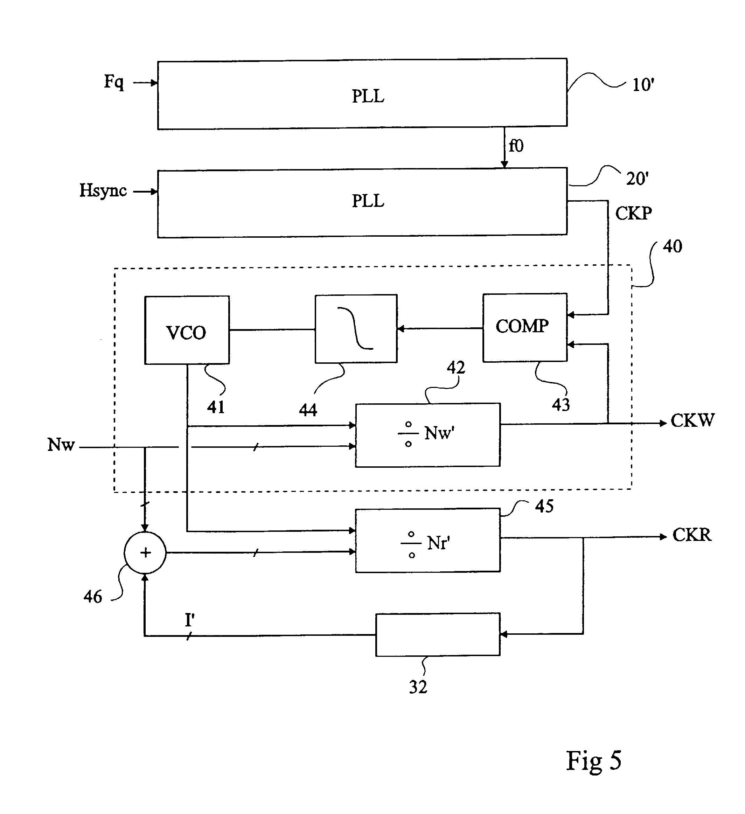

La figure 5 représente un deuxième mode de réalisation d'un circuit de génération d'horloge selon la présente invention.

Selon ce deuxième mode de réalisation, on génère une horloge pixel CKP du signal vidéo reçu, asservie sur le signal de synchronisation horizontale Hsync et cette horloge pixel d'acquisition sert de base à l'obtention des deux horloges CKW et CKR.

La génération de l'horloge CKP est effectuée au moyen d'une PLL analogique 10' et d'une PLL numérique 20'. Les circuits 10' et 20' sont similaires aux circuits 10 et 20 de la figure 3, le taux de division du diviseur 22 (figure 3) correspondant au nombre P de pixels d'une ligne.

Le signal CKP est envoyé sur une deuxième PLL analogique 40 chargée de générer le signal CKW. Cette PLL 40 comporte un VCO 41 recevant un signal de sortie d'un filtre passe-bas 44 de sortie d'un comparateur de phase 43. Le comparateur 43 reçoit, sur une première entrée, le signal CKP et, sur une deuxième entrée, une sortie d'un diviseur 42, programmable par un nombre constant Nw', délivrant le signal CKW et recevant en entrée une sortie du VCO 41.

Le signal de sortie du VCO 41 est également envoyé sur un diviseur 45 programmable par un nombre variable Nr' qui délivre le signal CKR. Le nombre Nr' est obtenu par la somme 46 du nombre Nw' et d'un incrément (positif ou négatif) I' délivré par une table d'incréments 32, commandée par le signal CKR.

Bien que ce mode de réalisation nécessite un deuxième VCO, il présente l'avantage d'utiliser des diviseurs 42 et 45 par des nombres entiers. En effet, le signal CKP représentant la fréquence des pixel du signal vidéo reçu, le recours à des synthétiseurs (21 et 31 en figure 3) réalisant des divisions fractionnelles n'est plus nécessaire.

Un autre avantage de ce deuxième mode de réalisation, lié à la division entière, est que l'horloge CKW présente une période constante lorsque la boucle 40 est verrouillée, alors que, dans le premier mode de réalisation, la période du signal CKW subit de légères variations pendant une ligne.

On notera que l'invention peut également être mise en oeuvre pour rendre le signal CKW de fréquence variable et le signal CKR de fréquence fixe. Il suffit pour cela d'inverser les références CKW et CKR dans la description qui précède et d'adapter les taux de division en conséquence. On veillera cependant à ce que le convertisseur analogique-numérique soit adapté à la gamme de variation de fréquence du signal CKW. Ce type de conversion de format peut, par exemple, être utilisé dans des applications où la fréquence d'affichage doit être fixe.

Bien entendu, la présente invention est susceptible de diverses variantes et modifications qui apparaîtront à l'homme de l'art. En particulier, la réalisation pratique des différents constituants du circuit est à la portée de l'homme de l'art en fonction des indications fonctionnelles données ci-dessus. En outre, bien qu'il ait été fait référence dans la description qui précède à deux mémoires 1 et 2, il pourra s'agir d'une mémoire unique partagée en zones. On notera également que l'invention s'applique quelle que soit la norme des signaux de télévision (PAL, SECAM, NTSC).

## Revendications

1. Dispositif de conversion de format d'images de télévision du type comportant :
deux mémoires (1, 2) de stockage de lignes d'image, commutées alternativement en lecture et en écriture ; et
un circuit de commande (5) délivrant auxdites mémoires (1, 2) une fréquence d'écriture (CKW) et une fréquence de lecture (CKR),
caractérisé en ce que ledit circuit de commande (5) comporte des moyens programmables de génération, par division d'une fréquence de référence (f0), desdites fréquences (CKW, CKR) asservies sur un signal de synchronisation horizontale (Hsync), une première fréquence (CKW) étant fixe et une deuxième fréquence étant programmée pour suivre une loi prédéfinie de variation du taux de division d'obtention de cette fréquence, la périodicité de ladite loi de variation correspondant à la durée d'une ligne de balayage.

2. Dispositif selon la revendication 1, caractérisé en ce que la loi de variation est non-linéaire.

3. Dispositif selon la revendication 1 ou 2, caractérisé en ce que la loi de variation présente une valeur moyenne nulle rapportée à une ligne de balayage.

4. Dispositif selon l'une quelconque des revendications 1 à 3, caractérisé en ce que la loi de variation est contenue dans une table programmable (32) contenant des incréments (I, I') à ajouter, au rythme de la deuxième fréquence (CKR), à un premier taux de division (Nw, Nw') d'obtention de la première fréquence (CKW), pour obtenir un deuxième taux de division (Nr, Nr') d'obtention de la deuxième fréquence (CKR).

5. Dispositif selon la revendication 4, caractérisé en ce que lesdits moyens de génération comportent :
une boucle à verrouillage de phase (10) analogique propre à délivrer la fréquence de référence (f0) à partir d'un quartz ;
une boucle à verrouillage de phase numérique (20) propre à délivrer, à partir de la fréquence de référence (f0) et dudit premier taux (Nw), la première fréquence (CKW) asservie sur ledit signal de synchronisation horizontale (Hsync), ledit premier taux (Nw) étant un nombre fractionnel représentant le taux de division moyen de la fréquence de référence (f0) par la première fréquence (CKW) ; et
un circuit numérique (30) de génération de la deuxième fréquence (CKR) à partir de la fréquence de référence (f0) et dudit deuxième taux (Nr).

6. Dispositif selon la revendication 5, caractérisé en ce que la boucle numérique (20) et le circuit (30) de génération de la deuxième fréquence (CKR) comportent, chacun, un synthétiseur de fréquence (21, 31) recevant en entrée, la fréquence de référence (f0) et, respectivement, lesdits premier (Nw) et deuxième (Nr) taux.

7. Dispositif selon la revendication 4, caractérisé en ce que lesdits moyens de génération comportent :
une première boucle à verrouillage de phase analogique (10') propre à délivrer la fréquence de référence (f0) à partir d'un quartz ;
une boucle à verrouillage de phase numérique (20) propre à délivrer, à partir de la fréquence de référence (f0), une horloge pixel (CKP) asservie sur le signal de synchronisation horizontale (Hsync) ;
une deuxième boucle à verrouillage de phase analogique (40) de génération de la première fréquence (CKW) à partir de l'horloge pixel (CKP), pourvue d'un oscillateur commandé en tension (41) et d'un premier diviseur (42) programmable par ledit premier taux (Nw'), ledit premier taux (Nw') étant un nombre entier ; et
un deuxième diviseur (45), programmable par ledit deuxième taux (Nr') et délivrant la deuxième fréquence (CKR) à partir d'une fréquence délivrée par ledit oscillateur (41), ledit deuxième taux (Nr') étant un nombre entier.

8. Dispositif selon l'une quelconque des revendications 1 à 7, caractérisé en ce que la première fréquence fixe est la fréquence d'écriture (CKW), la deuxième fréquence programmée étant la fréquence de lecture (CKR).

9. Dispositif selon l'une quelconque des revendications 1 à 7, caractérisé en ce que la première fréquence fixe est la fréquence de lecture, la deuxième fréquence programmée étant la fréquence de d'écriture.
